# EUROPEAN PATENT SPECIFICATION

(11) **EP 2 583 950 B1**
(45) Date of publication and mention of the grant of the patent: **30.04.2014**
(21) Application number: 11185769.4
(22) Date of filing: 19.10.2011
(51) Int. Cl.: C02F 1/76, C02F 1/32, C02F 103/42

(54) **Method and arrangement for a water treatment control**
Verfahren und Anordnung zur Wasserbehandlungssteuerung
Procédé et agencement pour le contrôle du traitement de l'eau

(43) Date of publication of application: 24.04.2013
(73) Proprietor: Siemens Aktiengesellschaft, 80333 München (DE)
(72) Inventor: Sichel, Cosima, 89077 Ulm (DE); Forstmeier, Dieter, 89331 Burgau (DE); Stein, Johannes, 89077 Ulm (DE); Garcia, Chona Dela Cruz, 45131 Essen (DE)
(74) Representative: Börner, Robert

(56) References cited:
- EP-A1- 0 133 920
- EP-A1- 2 299 035
- DE-A1- 10 306 967

## Description

### TECHNICAL FIELD OF THE INVENTION AND PRIOR ART

The present invention relates to water treatment control of water to be treated containing a chlorine disinfectant stabilized by a chlorine stabilizer.

Common disinfection methods for water, for example swimming pool water, include a dosing of a disinfectant, commonly a chlorine disinfectant, such as chlorine/chlorine gas (C12), chlorine dioxide (ClO2), hypochloric acid (HOCl) or hypo chlorite (OCl-). European Patent Application EP 2 299 035 A1 shows a system and method for dispensing chlorine dioxide into a body of water.

It is known that said chlorine disinfectant dosed to/contained in said water are very instable to UV irradiation - being degraded by said UV irradiation (photolytic chlorine degradation) (Mariko Tachikawa et al. "Effects of Isocyanuric Acid on the Monochlorodimedone Chlorinating rates with Free Chlorine and Ammonia Chloramine in Water", Water Research, 36 (2002), pp. 2547 - 2554; J. Gardiner, "Choloisocyanurates in the Treatment of Swimming Pool Water", Water Research Pergamon Press 1973, Vol. 7, pp. 823 - 833).

Especially by "open" water chlorine disinfection, particularly outdoor swimming pool water chlorine disinfection, said chlorine disinfectant dosed/contained in said "open" water, i.e. said outdoor swimming pool water, will strongly be degraded by sunlight (photolytic chlorine degradation).

An effect of photolytic chlorine degradation will increase for regions of high solar irradiance, for example southern European countries, but can also be relevant and/or significant - on sunny days - in other regions, such as northern European countries.

Photolytic chlorine degradation by water chlorine disinfection can be balanced by an increased chlorine disinfectant dosing, to maintain same, i.e. consistent effective, chlorine disinfectant concentration in said water to disinfect.

This effort will increase process costs while being unsatisfying for an operator/customer. Besides disinfecton byproducts which have negative health effects on bathers can increase due to increased chlorine consumption.

Another option can be an adding of a chlorine disinfectant stabilizing compound (chlorine stabilizer) to said water, stabilizing said chlorine disinfectant, i.e. improving a UV stability of said chlorine disinfectant.

A most successful of this compound in use at present is isocyanuric acid, which with chlorine species, i.e. chlorine disinfectant, forms reversibly N-chlorinated chloroisocyanurates in aqueous solution, i.e. in said water, and stabilizing said chlorine disinfectant (Mariko Tachikawa et al. "Effects of Isocyanuric Acid on the Monochlorodimedone Chlorinating rates with Free Chlorine and Ammonia Chloramine in Water", Water Research, 36 (2002), pp. 2547 - 2554; J. Gardiner, "Choloisocyanurates in the Treatment of Swimming Pool Water", Water Research Pergamon Press 1973, Vol. 7, pp. 823-833; C.J. Downes et al., "Determination of Cyanuric Acid Levels in Swimming Pool Waters By u.v. Absorbance, HPLC and Melamine Cyanurate Precipitation", Water Research Vol. 18, No. 3, pp. 277-280, 1984).

Chlorine disinfection of the (swimming pool) water can be conveniently carried out with chlorinated isocyanuric acid, for example solid chloroisocyanurate (tablets), usually a sodium or potassium salt of a dichloro compound, while said chlorinated isocyanurate species forming mon-, di- and tri-chlorinated species in a presence of said chlorine disinfectant dissolved in water, i.e. of free chlorine (J. Gardiner, "Choloisocyanurates in the Treatment of Swimming Pool Water", Water Research Pergamon Press 1973, Vol. 7, pp. 823 - 833; C.J. Downes et al., "Determination of Cyanuric Acid Levels in Swimming Pool Waters By u.v. Absorbance, HPLC and Melamine Cyanurate Precipitation", Water Research Vol. 18, No. 3, pp. 277-280, 1984).

In (swimming pool) water often chemical equilibrium were reported between said free chlorine and the chlorinated isocyanurate species.

In an absence of an adequate (online) monitoring of a chlorine disinfectant concentration and a concentration/level of said chlorine stabilizer, i.e. of said isocyanuric acid - in following also referred as isocyanic acid, while disinfecting said water, especially swimming pool water, with said chlorine disinfectant being stabilized with said chlorine stabilizer, said chlorine stabilizer could accumulate within said water, i.e. swimming pool water, endangering disinfection safety and water quality.

Known (concentration) measurement methods for said chlorine disinfectant and said isocyanuric/isocyanic acid are spectrometric methods (DPD, Melanin based CyA-Test). Only said chlorine disinfectant concentration can be as well monitored by online sensors.

Online measurements of said chlorine stabilizer concentration, especially of said isocyanic acid concentration, for water treatment applications have not yet been developed.

Such an online chlorine stabilizer measurement would not only allow to measure and/or monitor said chlorine stabilizer concentration, i.e. said isocyanic acid concentration, in water to be treated/disinfected, especially in swimming pool water.

Online chlorine stabilizer measurement also can facilitate an (online) water treatment/disinfection control - with substantial and extensive controlling functions/functionalities such as dosing water treatment components, as said chlorine stabilizer and said chlorine disinfectant, - for quality and cost optimized water, especially swimming pool water, treatment conditions.

Equipments for dosing as well as for a controlled dosing of chlorine disinfectant to water to be treated are known as well as equipments for irradiating water with UV, for example "Wallace & Tiernan®, Wasseraufbereitungs- und Desinfektionssysteme, Oktober 2010.

(Online) Sensors measuring chlorine disinfectant concentrations of chlorine disinfectant contained in water are known, for example a membrane sensor FC1 (Free Chlorine) or TC1 (Total Chlorine) as well as a bare electrode sensor Depolox5 of Wallace & Tiernan (Wallace & Tiernan, Siemens, Water Technologies, Produktinformation zu Membransensor FCl, TCl und zu Depolox5 Sensor).

### SUMMARY OF THE INVENTION

It is a first objective of the invention to provide a method and an arrangement by which the above-mentioned shortcomings in water treatment control can be mitigated.

It is a further objective of the invention to provide a method and an arrangement which facilitate an online monitoring and/or measurement of a chlorine stabilizer as well as an (online) water treatment/disinfection control.

These objectives are according to the invention achieved by providing a method and an arrangement for a water treatment control of water to be treated containing a chlorine disinfectant stabilized by a chlorine stabilizer.

This method comprising the following steps:
A concentration of said chlorine disinfectant contained in said water will be measured once before irradiating said water with an UV irradiation (initial chlorine concentration).
After irradiating said water with said UV irradiation said concentration of said chlorine disinfectant contained in said water will be measured twice (remaining chlorine concentration).

A concentration of said chlorine stabilizer contained in said water will be determined using said initial chlorine concentration and said remaining chlorine concentration for said water treatment control.

Said arrangement comprising:
- a flow pass of said water flowing at said flow pass with an UV source arrangement arranged at said flow pass for irradiating said water with an UV irradiation,
- a first measuring means arranged at said flow pass upstream of said UV source arrangement for measuring a concentration of said chlorine disinfectant contained in said water before irradiating said water with said UV irradiation (initial chlorine concentration)
- a second measuring means arranged at said flow pass downstream of said UV source arrangement for measuring said concentration of said chlorine disinfectant contained in said water after said irradiating of said water (remaining chlorine concentration),
- a controlling means for determining a concentration of said chlorine stabilizer contained in said water using said initial chlorine concentration and said remaining chlorine concentration for said water treatment control.

In other words - the invention relates to a measurement/determination of said chlorine stabilizer contained in said disinfected water with a measurement principle is based on the photolytic chlorine degradation.

The chlorine concentration of said water containing said chlorine disinfectant and said chlorine stabilizer, i.e. treated with said stabilized chlorine disinfectant, is measured in front of/before (initial chlorine concentration) and past/after (remaining chlorine concentration) said UV irradiation of said water - leading to a Δ in the chlorine concentration (Δchlorine).

The degradation of said chlorine disinfectant, i.e. said Δchlorine, correlates, for example is proportional, to said chlorine stabilizer concentration, as for example said isocyanic acid concentration.

Experiments have shown that a decrease in photolytic chlorine degradation - resulting in a decreased Δchlorine - is close to linear proportional to an increase in chlorine stabilizer concentration.

In other words - an increased concentration of said chlorine stabilizer contained in said water could be seen by decreased photolytic chlorine degradation, i.e. Δchlorine measured.

An exact UV/chlorine stabilizer dose response curve, for example an UV/isocyanic acid dose response curve, can be determined experimentally - and then used for determining said chlorine stabilizer concentration using said (measured) initial chlorine concentration and said (measured) remaining chlorine concentration, i.e. using said Δchlorine measured.

Hence, the concentration of said chlorine stabilizer is determined based on the change in free chlorine photolysis - easily measured by (online) chlorine sensors providing said chlorine stabilizer being online measured.

Online chlorine stabilizer measurement facilitate an (online) water treatment/disinfection control - with said substantial and extensive controlling functions/functionalities such as dosing water treatment components for quality and cost optimized water, especially swimming pool water, treatment conditions.

Therefore, the invention provides a new, effective approach for efficient water treatment/disinfection control reaching a targeted water quality at a very economic, ecological and practical way.

According to a preferred embodiment said chlorine disinfectant is chlorine/chlorine gas (Cl2), chlorine dioxide (ClO2) hypochloric acid (HOCl) or hypo chlorite (OCl-) as long as these chlorine disinfectants are most successful in use at present.

According to a further preferred embodiment said chlorine stabilizer is isocyanic acid. But as well other cynic species and similar chemicals, improving said UV stability of chlorinated species, i.e. said chlorine disinfectant, could be used.

Said chlorine disinfectant and said chlorine stabilizer can be combined as chlorinated or non chlorinated isocyanic acid being added/dosed to said water to be treated/disinfected. Hence, stabilized chlorine disinfection of the (swimming pool) water can be conveniently carried out with said chlorinated isocyanuric acid, for example dosed/dosing solid chloroisocyanurate (tablets, grains, powder) or in liquid form to said (swimming pool) water.

According to a preferred embodiment said UV source arrangement is one or more UV source/sources irradiating said water containing said chlorine disinfectant and chlorine stabilizer. Said UV source arrangement can have any shape and/or size, preferable hollowly coaxial or of cylindrical shape with the one or more UV source/sources inside and being flowed through by said water.

Said UV irradiation could be applied with an irradiation dose of about 200 J/m² - 4000 J/m². Furthermore said UV irradiation could have a wavelength of about 100 nm - 400 nm, especially having a wavelength of about 200 nm - 400 nm, furthermore especially of about 240 nm - 300 nm.

The UV source arrangement could be selected with the degradation in chlorine concentration can easily be detected but as well as regarding capital and operational cost of the arrangement.

In a preferred embodiment said UV source arrangement comprises a poly-chromatic irradiator/medium pressure UV source. Medium pressure UV sources/lamps provide an expanded wavelength spectrum and could be constructed more compact.

Said UV source arrangement could also be a mono-chromatic irradiator/low pressure UV source, for example a low pressure amalgam UV lamp or a low pressure mercury UV lamp. Low pressure UV lamps are highly efficient while providing a small spectrum by a wavelength of about 257,3 nm, less energy input combined with less costs.

In an especially preferred embodiment said UV source arrangement comprises one or more tubular low pressure UV lamps operating in a range of 20 Watt - 100 Watt.

As well solar irradiance can be used as an UV source as well as excimer lights or UV-LEDs or even light sources emitting below a UV spectrum in visible light range (with lower photolysis yields).

Furthermore an UV sensor (or more) - for a low pressure UV source or a medium pressure UV source - and/or a UV filter (or more) could be used in combination with said UV irradiation provided by said UV source arrangement, e.g. low pressure UV source or medium pressure UV source, for controlling an irradiance of said UV irradiation.

A flow rate of said water - while being measured - and/or a reaction time, i.e. an irradiation time, could be kept constant as the photolytic chlorine degradation would depend on the irradiation (W) and the reaction time (T), i.e. on the dose (D) or fluence (F). It could - while not being kept constant - as well be measured and integrated as parameter into the overall measurement.

Preferable said first and/or second measuring means for measuring said initial/remaining chlorine concentration is a/are online chlorine sensor(s), especially measuring free chlorine, i.e. free chlorine concentration.

Such a sensor, for example a membrane sensor FCl or TCl (Free Chlorine/Total Chlorine) or a bare electrode sensor Depolox5 of Wallace & Tiernan (Wallace & Tiernan, Siemens, Water Technologies, Produktinformation zu Membransensor FCl, TCl und zu Depolox5 Sensor), is well known, long term stable while measuring and requires low maintenance costs.

But as well a sensor/sensors for total chlorine or combined chlorine species or similar devices/means could provide an adequate chlorine signal being used for determining said chlorine stabilizer concentration.

Sensor/measurement means signals and/or sensor/measurement means data according to said measured initial and/or remaining chlorine concentration(-s) could be processed online by said controlling means, for example a processing unit provided with measurement/controlling software, facilitating said determination of said chlorine stabilizer concentration for said water treatment control.

Said water treatment controlling could include a dosing and/or an adjustment of adding/dosing of said chlorine disinfectant and/or said chlorine stabilizer and/or said combined stabilized chlorine disinfectant facilitating disinfection as well as stabilisation of said chlorine disinfectant, such as chlorinated isocyanic acid (tablets), to said water.

Said water treatment controlling could also include controlling said irradiating/UV irradiation source as well as controlling said flow rate of said water to be treated/disinfected.

According to a preferred embodiment said water to be disinfected flows at a flow rate typically for respective water treatment controlling measurement systems, for example at a flow rate of 1 L/h - 50 L/h, especially at a, especially constant, flow rate of about 5 L/h - 35 L/h. The flow rate can be controlled/monitored by use of a flow control.

According to a preferred embodiment said water to be disinfected could be swimming pool water. But nevertheless said method and arrangement could be used for any disinfection application that need UV stabilization of said chlorine disinfectant, particularly whose free chlorine.

Said method and/or arrangement for said water treatment control could be applied to said water while said water flows in a main water circulation, for example a swimming pool water circulation, particularly that is treated by the UV device serving as well as said arrangement for the chlorine stabilizer determination, particularly for an isocyanuric acid measurement, as well as said water flows in a "by pass" flow being arranged in parallel to said main water circulation. As another option the water can be discharged after the measurement in by pass.

Further advantages as well as advantageous features of the invention appear from the following description.

### BRIEF DESCRIPTION OF THE DRAWINGS

With reference to the appended drawings, below follows a specific description of an embodiment of the invention cited as example, water treatment control with online measurement of isocyanic acid.

In the drawings:
- Figure 1: is a schematic illustration of an online measurement system for isocyanic acid according to an embodiment of the invention,
- Figure 2: is a schematic illustration of an online measurement process for isocyanic acid according to an embodiment of the invention.

### DETAILED DESCRIPTION OF AN EMBODIMENT OF THE INVENTION

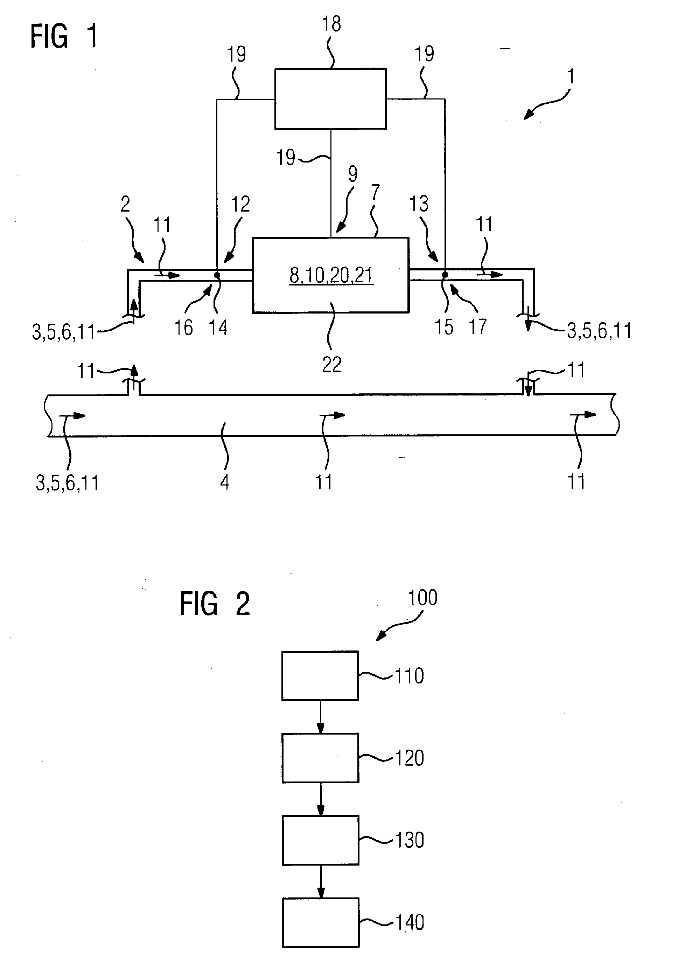

The present invention is directed to an arrangement 1 and a method 100 for a water treatment/chlorine disinfection control facilitating an online measurement of a chlorine stabilizer, i.e. of isocyanic acid, as schematically illustrated in FIG 1 and FIG 2.

The water treatment/chlorine disinfection control 1, 100 facilitating said online isocyanic acid measurement as schematically illustrated in FIG 1 and FIG 2 will be used for disinfecting swimming pool water 3 while being applied to a "by pass" 2 of a main water circulation of said swimming pool water circulating 4.

The swimming pool water 3, only referred as water 3, to be disinfected by a chlorine disinfectant 5, especially by chlorine 5, contains hazardous contaminants, especially residuals of pesticides, pharmaceuticals, drugs, hormones, personal care products - which can be eliminated by the water chlorine disinfection, i.e. by said chlorine 5.

As it is known that said chlorine disinfectant 5, as said chlorine 5, is very instable to UV irradiation and being degraded by said UV irradiation 7 (photolytic chlorine degradation 8) a chlorine disinfectant stabilizing compound (chlorine stabilizer) 6, said isocyanic acid 6 is added to said water 3, stabilizing said chlorine disinfectant 5, i.e. improving the UV stability of said chlorine 5.

Therefore, chlorinated isocyanuric acid 5, 6, as exemplarily solid chloroisocyanurate (tablets) 5, 6, is added to said water 3 with said chlorine 5 and said isocyanic acid 6 then being dissolved in said water 3 while forming a chemical equilibrium between free chlorine and the chlorinated isocyanurate species.

As accumulated isocyanic acid 6 endanger disinfection safety and water quality an adequate (online) measurement/monitoring 140 of the concentration/level of said isocyanic acid 6 must be provided facilitating an efficient and effective water treatment/disinfection control 1, 100.

The measurement principle for said online measurement/monitoring of said isocyanic acid 6, 140 contained in said water 3 based on the photolytic chlorine degradation 8 - with the chlorine concentration of said water 3 will be (online) measured in front of/before (initial chlorine concentration, 12, 110) and past/after (remaining chlorine concentration, 13, 130) a defined UV irradiation 7 of said water 3 intermediate/between 130.

The photolytic degradation 8 of said chlorine 5, i.e. said (online) measured change in concentration (Δchlorine), is first order decay to said isocyanic acid 6 contained in said water 3. Said online monitoring/measurement 140 of the isocyanic acid 6 will be facilitated by measuring 110, 130 said initial and remaining chlorine concentration 12, 13 and processing the isocyanic acid 6 (concentration) consequentially.

Based on that online monitoring 140 of the isocyanic acid 6 the water treatment control 1, 100 will be executed by controlling a dosing (not shown) of the chlorine 5 and the isocyanic acid 6 to said water 3 - therefore controlling water disinfection and water quality.

The water 3 - containing the chlorine disinfectant 5 and the chlorine stabilizer 6, i.e. containing the chlorine 5 and the isocyanic acid 6 - enters as shown in FIG 1 the "by pass" 2.

The "by pass" 2 comprises three sections 12, 13, 7 with a first section 12, an initial chlorine concentration measurement section 12, a second section 7, an UV irradiating section 7, and a third section 13, a remaining chlorine concentration measurement section 13 - with said three sections 12, 13, 7 arranged in a flow direction 11 of said water 3 flowing through the "by pass" 2 by a constant flow rate, exemplarily in a rage of about 5 L/h - 35 L/h.

The initial chlorine concentration measurement section 12 as well as the remaining chlorine concentration measurement section 13 comprise a first 14 and second 15 online sensor 14, 15 being arranged at a first 16 and second 17 measuring point 16, 17 within the initial/remaining chlorine concentration measurement section 12, 13 for measuring 110, 130 a initial/remaining concentration of the free chlorine in the water 3 - with the water 3 be irradiated 120 within the UV irradiating section 7 arranged between the concentration measurement sections 12, 13.

The first sensor 14 as well as the second sensor 15 are connected to an analyser and controller system 18, cited as a controller 18, via a circuit 19 controlling the concentration measurements of the chlorine - and - further - processing the measured (initial/remaining) chlorine concentration facilitating the water treatment control 1, 100.

The water 3 - leaving the first section 12 - enters the second section 7, i.e. a reaction chamber 9 with tubular low pressure UV lamps 20 inside, to be irradiated 120 with a defined UV irradiation 7 while flowing through the reaction chamber 9.

The reaction chamber 9 can have varying shape and size. FIG 1 shows said reaction chamber 9 shaped as a cylinder being passed by the water 3 with said constant flow rate.

While the water 3 being irradiated 120 with UV a photolytic chlorine degradation 8 will be processed within the water 3 degrading the chlorine 5 contained in the water 3.

FIG 1 shows an UV sensor 21 and an UV filter 22 being arranged at the UV lamps 20 used for controlling the irradiance of said UV irradiation 7 while measuring said UV irradiation 7 filtered by said UV filter 22.

The UV sensor 21 as well as the UV lamps 20 is also connected to the controller 18 via a circuit 19 - being controlled by the controller 18 facilitating said defined UV irradiation 7.

The irradiation 7 of the water 3 - provided with an irradiation dose of about 3000 J/m² - yields said photolytic chlorine degradation 8 (Δchlorine).

The photolytic chlorine degradation 8 (Δchlorine) depends, belong other parameters, the (defined) irradiance 7 of the UV source/lamps 20 as well as the isocyanic acid 6 contained in the water 3 while a knowledge of said Δchlorine measured allows processing and monitoring the isocyanic acid concentration.

Leaving the third section 13 the water 3 will leave the "by pass" 2 and be discharged in the main pool water circulation 4. As other option the water can be discharged after the measurement in by pass.

The first sensor 14 and the second sensor 15 are measuring n110, 130 the initial/remaining concentration (12, 13) of the free chlorine in the water 8 at the first and second measuring point 16, 17 while the sensor signals and sensor data according to said measured concentrations are transferred - via the circuit 19 - to the controller 18 for processing.

The first and second sensor 14, 15 are realized as membrane sensors, i.e. as a membrane sensor FC1 or TC1 of Wallace & Tiernan (Wallace & Tiernan, Siemens, Water Technologies, Produktinformation zu Membransensor FCl und TCl).

While knowing the UV irradiating parameters of the UV irradiation 7, as the dose, reaction time and fluence, as well as the flow rate of the water 3 and the UV/isocyanic acid dose response curve which has be determined experimentally preliminary the isocyanic acid 6 will be processed and monitored 140.by said controller 18.

Based on that online processing/monitoring 140 of the isocyanic acid 6 the water treatment control 1, 100 will be executed by controlling a dosing of the chlorine 5 and the isocyanic acid 6, i.e. said chlorinated isocyanuric acid 5, 6, to said water 3 - therefore controlling water disinfection and water quality.

Therefore, in case of an increase of the isocyanic acid 6 - online monitored 140 on basis of the photolytic chlorine degradation 8, i.e. Δchlorine measured and processed - exceeding a threshold - the dosing of the isocyanic acid 6 to said water 3 will be adjusted, i.e. will be reduced, while additional chlorine could be additionally added by dosing means (not shown) controlled by the controller 18 to maintain sufficient chlorine water disinfection.

### Reference list

- 1: arrangement for a water treatment/chlorine disinfection control
- 2: by pass, flow pass
- 3: swimming pool water
- 4: main water circulation of said swimming pool water circulating, main pool water circulation
- 5: chlorine disinfectant, chlorine
- 6: chlorine stabilizer, isocyanic acid
- 7: UV irradiation (section)
- 8: photolytic chlorine degradation
- 9: reaction chamber
- 10: UV source
- 11: flow direction
- 12: initial chlorine concentration measurement (section)
- 13: remaining chlorine concentration measurement (section)
- 14: first online sensor
- 15: second online sensor
- 16: first measuring point
- 17: second measuring point
- 18: controller, analyser and controller system
- 19: circuit
- 20: tubular low pressure UV lamp(-s)
- 21: UV sensor
- 22: UV filter
- 100: method for a water treatment/chlorine disinfection control
- 110: measuring a concentration of a chlorine disinfectant contained in water before irradiating said water with an UV irradiation (initial chlorine concentration)
- 120: irradiating water with UV irradiation
- 130: measuring a concentration of a chlorine disinfectant contained in water after irradiating of said water (remaining chlorine concentration)
- 140: determining a concentration of a chlorine stabilizer using a initial chlorine concentration and a remaining chlorine concentration, online measurement/monitoring of a chlorine stabilizer

## Claims

1. Method for a water treatment control of water (3) to be treated containing a chlorine disinfectant (5) stabilized by a chlorine stabilizer (6) comprising the following steps
- measuring a concentration of said chlorine disinfectant (5) contained in said water (3) before irradiating (120) said water (3) with an UV irradiation (initial chlorine concentration) (110),
- irradiating said water (3) with said UV irradiation (120),
- measuring said concentration of said chlorine disinfectant (5) contained in said water (3) after said irradiating (130) of said water (3) (remaining chlorine concentration) (130),
- determining a concentration of said chlorine stabilizer (6) using said initial chlorine concentration and said remaining chlorine concentration for said water treatment control (1, 100) (140).

2. Method for a water treatment control according to any preceding claim wherein said chlorine disinfectant (5) is chlorine/chlorine gas (Cl2), chlorine dioxide (ClO2), hypochloric acid (HOCl) or hypo chlorite (OCl-).

3. Method for a water treatment control according to any preceding claim wherein said chlorine stabilizer (6) is isocyanic acid.

4. Method for a water treatment control according to any preceding claim wherein said water (3) to be treated is a swimming pool water.

5. Method for a water treatment control according to any preceding claim wherein a change between said initial and said remaining chlorine concentration is determined (Δchlorine) while determining said concentration of said chlorine stabilizer (140), especially with an increase or decrease in said change between said initial and said remaining chlorine concentration correlating with a decrease or increase of said concentration of said chlorine stabilizer (6).

6. Method for a water treatment control according to any preceding claim used for an online measurement and/or online monitoring of said chlorine stabilizer (6) with said initial and remaining chlorine concentration being online measured and/or said online measured initial/remaining chlorine concentration being online processed to determine said concentration of said chlorine stabilizer (6) online.

7. Method for a water treatment control according to the preceding claim wherein said water treatment control uses said online measured and/or online monitored chlorine stabilizer concentration.

8. Arrangement for a water treatment control of water (3) to be treated containing a chlorine disinfectant (5) stabilized by a chlorine stabilizer (6) comprising
- a flow pass (2) of said water (3) flowing at said flow pass (2) with an UV source arrangement (9) arranged at said flow pass (2) for irradiating said water (3) with an UV irradiation (7),
- a first measuring means (14) arranged at said flow pass (2) upstream of said UV source arrangement (9) for measuring (110) a concentration of said chlorine disinfectant (5) contained in said water (3) before irradiating (120) said water (3) with said UV irradiation (7) (initial chlorine concentration)
- a second measuring means (15) arranged at said flow pass (2) downstream of said UV source arrangement (9) for measuring (130) said concentration of said chlorine disinfectant (5) contained in said water (3) after said irradiating (120) of said water (3) (remaining chlorine concentration),
- a controlling means (18) for determining (140) a concentration of said chlorine stabilizer (6) using said initial chlorine concentration and said remaining chlorine concentration for said water treatment control (1, 100).

9. Arrangement for a water treatment control according to any preceding arrangement claim wherein said UV source arrangement (9) comprises one or more tubular low pressure UV lamps (20), especially operating in a range of 20 Watt - 100 Watt and/or with an irradiation dose of about 200 J/m² - 4000 J/m².

10. Arrangement for a water treatment control according to any preceding arrangement claim arranged at a "by pass" (2) of a main water circulation (4), especially of a main pool water circulation (4).

## Patentansprüche

1. Verfahren zur Wasserbehandlungssteuerung von zu behandelndem Wasser (3), welches ein Chlordesinfektionsmittel (5) enthält, das durch einen Chlorstabilisator (6) stabilisiert ist, die folgenden Schritte umfassend:
- Messen einer Konzentration des in dem Wasser (3) enthaltenen Chlordesinfektionsmittels (5) vor einem Bestrahlen (120) dieses Wassers (3) mit einer UV-Strahlung (Anfangschlorkonzentration) (110),
- Bestrahlen des Wassers (3) mit der UV-Strahlung (120),
- Messen der Konzentration des in dem Wasser (3) enthaltenen Chlordesinfektionsmittels (5) nach dem Bestrahlen (130) dieses Wassers (3) (Restchlorkonzentration) (130),
- Bestimmen einer Konzentration des Chlorstabilisators (6) unter Verwendung der Anfangschlorkonzentration und der Restchlorkonzentration für die Wasserbehandlungssteuerung (1, 100) (140).

2. Verfahren zur Wasserbehandlungssteuerung nach einem der vorhergehenden Ansprüche, wobei das Chlordesinfektionsmittel (5) Chlor/Chlorgas (Cl₂), Chlordioxid (ClO₂), hypochlorige Säure (HOCI) oder Hypochlorit (OCl-) ist.

3. Verfahren zur Wasserbehandlungssteuerung nach einem der vorhergehenden Ansprüche, wobei der Chlorstabilisator (6) Isocyansäure ist.

4. Verfahren zur Wasserbehandlungssteuerung nach einem der vorhergehenden Ansprüche, wobei das zu behandelnde Wasser (3) ein Schwimmbadwasser ist.

5. Verfahren zur Wasserbehandlungssteuerung nach einem der vorhergehenden Ansprüche, wobei eine Änderung zwischen der Anfangs- und der Restchlorkonzentration bestimmt wird (ΔChlor), während die Konzentration des Chlorstabilisators bestimmt wird (140), wobei insbesondere eine Erhöhung oder Verringerung dieser Änderung zwischen der Anfangs- und der Restchlorkonzentration mit einer Verringerung oder Erhöhung der Konzentration des Chlorstabilisators (6) korreliert.

6. Verfahren zur Wasserbehandlungssteuerung nach einem der vorhergehenden Ansprüche, das für eine Online-Messung und/oder Online-Überwachung des Chlorstabilisators (6) verwendet wird, wobei die Anfangs- und die Restchlorkonzentration online gemessen werden und/oder diese online gemessene Anfangs-/Restchlorkonzentration online verarbeitet wird, um die Konzentration des Chlorstabilisators (6) online zu bestimmen.

7. Verfahren zur Wasserbehandlungssteuerung nach dem vorhergehenden Anspruch, wobei bei dieser Wasserbehandlungssteuerung die online gemessene und/oder online überwachte Chlorstabilisatorkonzentration verwendet wird.

8. Anordnung zur Wasserbehandlungssteuerung von zu behandelndem Wasser (3), welches ein Chlordesinfektionsmittel (5) enthält, das durch einen Chlorstabilisator (6) stabilisiert ist, welche umfasst:
- einen Strömungskanal (2) für das durch diesen Strömungskanal (2) strömende Wasser (3), wobei eine UV-Quellenanordnung (9) an dem Strömungskanal (2) angeordnet ist, zum Bestrahlen des Wassers (3) mit einer UV-Strahlung (7),
- ein erstes Messmittel (14), das an dem Strömungskanal (2) stromaufwärts der UV-Quellenanordnung (9) angeordnet ist, zum Messen (110) einer Konzentration des in dem Wasser (3) enthaltenen Chlordesinfektionsmittels (5) vor einem Bestrahlen (120) dieses Wassers (3) mit der UV-Strahlung (7) (Anfangschlorkonzentration),
- ein zweites Messmittel (15), das an dem Strömungskanal (2) stromabwärts der UV-Quellenanordnung (9) angeordnet ist, zum Messen (130) der Konzentration des in dem Wasser (3) enthaltenen Chlordesinfektionsmittels (5) nach dem Bestrahlen (120) dieses Wassers (3) (Restchlorkonzentration),
- ein Steuerungsmittel (18) zum Bestimmen (140) einer Konzentration des Chlorstabilisators (6) unter Verwendung der Anfangschlorkonzentration und der Restchlorkonzentration für die Wasserbehandlungssteuerung (1, 100).

9. Anordnung zur Wasserbehandlungssteuerung nach einem der vorhergehenden Anordnungsansprüche, wobei die UV-Quellenanordnung (9) eine oder mehrere röhrenförmige UV-Niederdrucklampen (20) umfasst, die insbesondere in einem Bereich von 20 Watt - 100 Watt und/oder mit einer Bestrahlungsdosis von etwa 200 J/m² - 4.000 J/m² arbeiten.

10. Anordnung zur Wasserbehandlungssteuerung nach einem der vorhergehenden Anordnungsansprüche, die an einem "Umgehungskanal" (2) eines Hauptwasserkreislaufs (4), insbesondere eines Haupt-Schwimmbadwasserkreislaufs (4), angeordnet ist.

## Revendications

1. Procédé pour un contrôle du traitement de l'eau pour de l'eau (3) à traiter contenant un désinfectant au chlore (5) stabilisé par un stabilisant du chlore (6) comprenant les étapes suivantes
- mesurer une concentration dudit désinfectant au chlore (5) contenu dans ladite eau (3) avant d'irradier (120) ladite eau (3) avec une irradiation aux UV (concentration de chlore initiale) (110),
- irradier ladite eau (3) avec ladite irradiation aux UV (120),
- mesurer ladite concentration dudit désinfectant au chlore (5) contenu dans ladite eau (3) après ladite irradiation (130) de ladite eau (3) (concentration de chlore restante) (130),
- déterminer une concentration dudit stabilisant du chlore (6) à l'aide de ladite concentration de chlore initiale et de ladite concentration de chlore restante pour ledit contrôle du traitement de l'eau (1, 100) (140).

2. Procédé pour un contrôle du traitement de l'eau selon l'une quelconque des revendications précédentes, dans lequel ledit désinfectant au chlore (5) est le chlore/un gaz chloré (C12), le dioxyde de chlore (ClO2), l'acide hypochloreux (HOCl) ou l'hypochlorite (OCl-).

3. Procédé pour un contrôle du traitement de l'eau selon l'une quelconque des revendications précédentes, dans lequel ledit stabilisant du chlore (6) est l'acide isocyanique.

4. Procédé pour un contrôle du traitement de l'eau selon l'une quelconque des revendications précédentes, dans lequel ladite eau (3) à traiter est une eau de piscine.

5. Procédé pour un contrôle du traitement de l'eau selon l'une quelconque des revendications précédentes, dans lequel un changement entre ladite concentration de chlore initiale et ladite concentration de chlore restante est déterminée (Δchlore) pendant la détermination de ladite concentration dudit stabilisant du chlore (140), notamment avec une augmentation ou une diminution dudit changement entre ladite concentration de chlore initiale et ladite concentration de chlore restante qui établit une corrélation avec une diminution ou une augmentation de ladite concentration dudit stabilisant du chlore (6).

6. Procédé pour un contrôle du traitement de l'eau selon l'une quelconque des revendications précédentes utilisé pour une mesure en direct et/ou une surveillance en direct dudit stabilisant du chlore (6) avec lesdites concentrations de chlore initiale et restante qui sont mesurées en direct et/ou ladite concentration initiale/restante mesurée en direct qui est traitée en direct afin de déterminer ladite concentration dudit stabilisant du chlore (6) en direct.

7. Procédé pour un contrôle du traitement de l'eau selon la revendication précédente, dans lequel ledit contrôle du traitement de l'eau utilise ladite concentration de stabilisant du chlore mesurée en direct et/ou surveillée en direct.

8. Agencement pour un contrôle du traitement de l'eau pour de l'eau (3) à traiter contenant un désinfectant au chlore (5) stabilisé par un stabilisant du chlore (6) comprenant
- une voie d'écoulement (2) de ladite eau (3) s'écoulant au niveau de ladite voie d'écoulement (2) avec un agencement de source d'UV (9) agencé au niveau de ladite voie d'écoulement (2) pour irradier ladite eau (3) avec une irradiation aux UV (7),
- un premier moyen de mesure (14) agencé au niveau de ladite voie d'écoulement (2) en amont dudit agencement de source d'UV (9) pour mesurer (110) une concentration dudit désinfectant au chlore (5) contenu dans ladite eau (3) avant d'irradier (120) ladite eau (3) avec ladite irradiation aux UV (7) (concentration de chlore initiale)
- un deuxième moyen de mesure (15) agencé au niveau de ladite voie d'écoulement (2) en aval dudit agencement de source d'UV (9) pour mesurer (130) ladite concentration dudit désinfectant au chlore (5) contenu dans ladite eau (3) après ladite irradiation (120) de ladite eau (3) (concentration de chlore restante),
- un moyen de contrôle (18) pour déterminer (140) une concentration dudit stabilisant du chlore (6) à l'aide de ladite concentration de chlore initiale et de ladite concentration de chlore restante pour ledit contrôle du traitement de l'eau (1, 100).

9. Agencement pour un contrôle du traitement de l'eau selon l'une quelconque des revendications d'agencement précédentes, dans lequel ledit agencement de source d'UV (9) comprend une ou plusieurs lampes à UV basse pression tubulaires, fonctionnant notamment dans une plage de 20 Watts à 100 Watts et/ou avec une dose d'irradiation d'environ 200 J/m² à 4000 J/m².

10. Agencement pour un contrôle du traitement de l'eau selon l'une quelconque des revendications d'agencement précédentes agencé au niveau d'une « dérivation » (2) d'une circulation d'eau principale (4), notamment d'une circulation d'eau de piscine principale (4).
